# EUROPEAN PATENT APPLICATION

(11) **EP 2 257 100 A1**
(43) Date of publication of application: **01.12.2010**
(21) Application number: 10163056.4
(22) Date of filing: 18.05.2010
(51) Int. Cl.: H04W 28/08

(54) **Re-transmission of service connection requests between radio network controllers**

(30) Priority: 26.05.2009 JP 2009126955
(71) Applicant: Fujitsu Limited, Kawasaki-shi, Kanagawa 211-8588 (JP)
(72) Inventor: Kitahara, Yoshie, Kawasaki-shi Kanagawa 211-8588 (JP); Sasaki, Yoshimi, Kawasaki-shi Kanagawa 211-8588 (JP); Munakata, Yuji, Kawasaki-shi Kanagawa 211-8588 (JP)
(74) Representative: Fenlon, Christine Lesley

(57) **Abstract**

A communication system includes a first controller which includes a first retransmission request unit to request a mobile station, as a source of a first service connection request, to retransmit the first service connection request addressed to a second controller, which is able to set a communication line with a rate that is higher than the rate of the first controller, when receiving the first service connection request requesting a connection related to a first service from the mobile station, and a second controller which includes a second retransmission request unit to request the mobile station, as the source of a second service connection request, to retransmit the second service connection request addressed to the first controller, which is able to set a communication line, when receiving the second service connection request requesting a connection related to the second service from the mobile station.

## Description

### FIELD

The present invention relates to a communication system and a communication method that provide a user with a service by a plurality of communication specifications, and to a control apparatus that sets a communication line.

### BACKGROUND

There is a third generation (3G) system (see, for example, Japanese Laid-Open Patent Publication No. 2001-16652), which provides a mobile station with voice data, packet data, or the like related to a communication, according to a communication specification called Third Generation (3G). The 3G system includes a mobile station, a Base Transceiver Station (BTS) that transmits and receives radio signals to and from the mobile station, a Radio Network Controller (RNC) that is connected to the BTS, and a Mobile Multimedia switching System (MMS) that is connected to the RNC.

To receive provision of a service, the mobile station transmits a connection request to the RNC via the BTS transmitting the radio signal of the highest receiving level. When receiving the connection request, the RNC sets a communication line via the MMS between a server that provides a service and the requesting mobile station as a source of the connection request.

According to a communication specification called Long Term Evolution (LTE), an LTE system that provides a service at a communication rate that is higher than that of the 3G system has been developed in recent years. This LTE system includes a mobile station as any terminal which communications with the base station, an LTE base station that provides functions as a base transceiver station and as a controller, and a core network apparatus. The LTE base station may be called an evolved NodeB (eNodeB). The core network apparatus may be called an access Gateway (aGW).

When receiving the connection request from the mobile station, the LTE base station sets the communication line via the core network apparatus between the server that provides the service and the requesting mobile station as the source of the connection request.

The above-described communication system in which the 3G system and the LTE system coexist has the following problems.

To receive the service, the mobile station transmits the connection request to the RNC via the BTS if the receiving level of the radio signal from the BTS is higher than the receiving level of the radio signal from the LTE base station. In this case, since the RNC sets the communication line, the service is provided at a low communication rate even if the service may be provided by the LTE system at a higher communication rate.

The LTE system may not set the communication line even if the LTE base station receives the connection request because some of the services provided such as a communication service, for example, by the 3G system may not be provided. As a result, some of the services may not be provided to a user of the mobile station.

The present invention is intended to at least ameliorate the above-described problem. Accordingly, it is considered desirable to provide a communication system in which all services are able to be provided and the services are able to be provided at the high communication rate, a communication method, and a controller.

### SUMMARY

According to an aspect of the invention, a communication system includes a first controller which includes a first retransmission request unit to request a requesting mobile station, as a source of a first service connection request, to retransmit a first service connection request addressed to a second controller which is able to set a communication line with a rate that is higher than the rate of the first controller when receiving the first service connection request requesting for a connection related to a first service from the mobile station, and a second controller which includes a second retransmission request unit to request the mobile station as the request source of a second service connection request to retransmit the second service connection request addressed to the first controller which is able to set the communication line when receiving the second service connection request requesting for the connection related to the second service from the mobile station.
The object and advantages of the invention will be realized and attained by means of the elements and combinations particularly pointed out in the claims.
It is to be understood that both the foregoing general description and the following detailed description are exemplary and explanatory and are not restrictive of the invention, as claimed.

### BRIEF DESCRIPTION OF THE DRAWINGS

FIG.1 is a diagram illustrating an outline of a communication system according to a first embodiment,
FIG. 2A and FIG. 2B are diagrams illustrating another outline of the communication system according to the first embodiment,
FIG.3 is a block diagram illustrating a configuration of a mobile station,
FIG. 4 is a diagram illustrating an example of a receiving level list,
FIG. 5 is a block diagram illustrating a configuration of a radio network controller,
FIG. 6 is a diagram illustrating an example of information to be stored in a management table storage unit,
FIG. 7 is a block diagram illustrating a configuration of an LTE base station,
FIG. 8 is a diagram illustrating incoming call connecting processing,
FIG.9 is a flowchart illustrating a flow of connection response receiving processing by the mobile station,
FIG. 10 is a flowchart illustrating a flow of communication line setting processing by the radio network controller,
FIG. 11 is a flowchart illustrating a flow of the communication line setting processing by the LTE base station,
FIG.12 is a diagram illustrating a configuration of the radio network controller according to a second embodiment,
FIG.13 is a flowchart illustrating a flow of the communication line setting processing by the radio network controller according to the second embodiment,
FIG. 14A and FIG. 14B are diagrams illustrating an example of frequency information,
FIG.15 is a diagram illustrating a configuration of the radio network controller according to a third embodiment,
FIG. 16 is a diagram illustrating an example of information to be stored in the management table storage unit according to the third embodiment,
FIG.17 is a flowchart illustrating a flow of the communication line setting processing by the radio network controller according to the third embodiment, and
FIG.18 is a flowchart illustrating a flow of setting propriety determination processing.

### DETAILED DESCRIPTION OF EMBODIMENTS

Description will be made below of a first embodiment of a communication system, a communication method, and a controller.

### [First Embodiment]

### [Outline of Communication System according to First Embodiment]

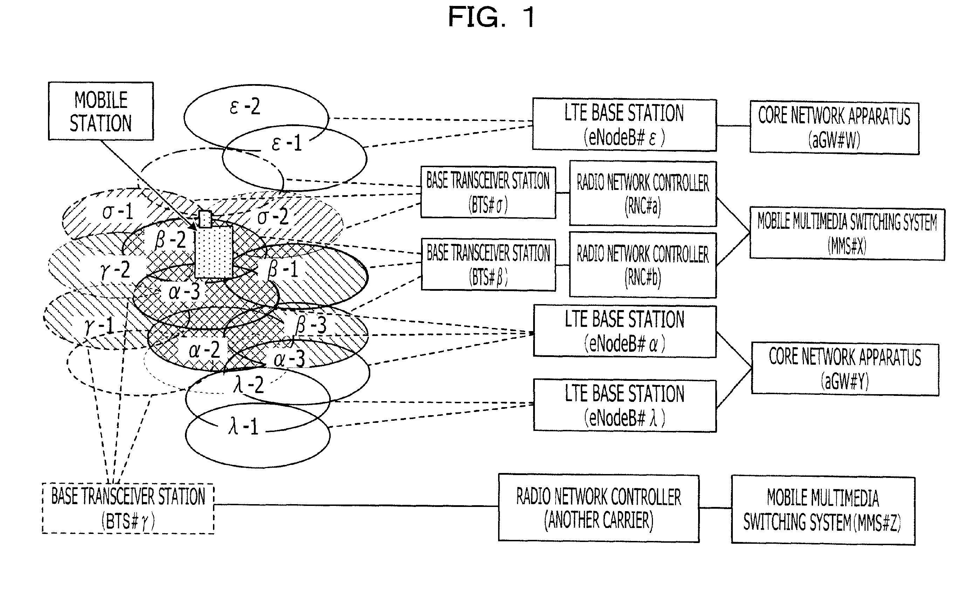

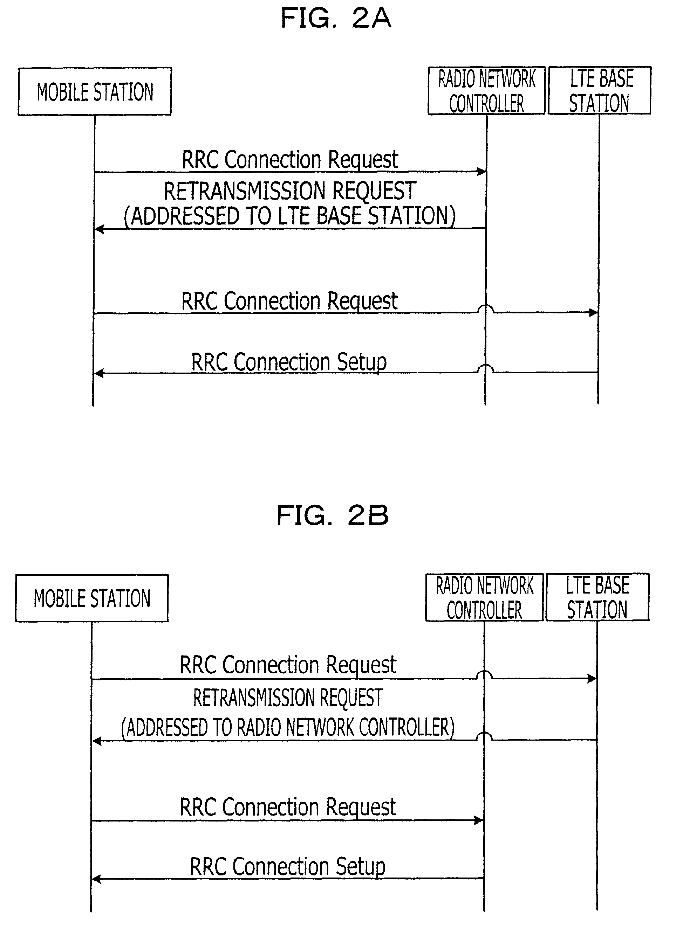

FIG. 1, FIG. 2A and FIG. 2B are diagrams illustrating an outline of a communication system according to a first embodiment. As illustrated in Fig. 1, the communication system according to the first embodiment is a communication system in which a 3G system, which includes a base transceiver station, a radio network controller, and a mobile multimedia switching system, and an LTE system, which includes an LTE base station and a core network apparatus, coexist.

The communication system according to the first embodiment provides a user of a mobile station with a service. The communication system according to the first embodiment is able to provide all services and to provide the services at a high communication rate.

The mobile station measures each receiving level of radio signals transmitted from the base transceiver station and the LTE base station and transmits, to the base station transmitting the radio signal of the highest receiving level, an RRC Connection Request that requests a connection related to the service to be provided.

Assuming in a first example that the mobile station transmits a first service connection request, that requests a connection related to a first service, to the base transceiver station, when receiving the first service connection request from the mobile station, the radio network controller of the communication system requests the requesting mobile station to retransmit the first service connection request addressed to the LTE base station that is able to set a communication line of a communication rate that is higher than the rate of the radio network controller.

As illustrated in FIG.2A, for example, the mobile station transmits the RRC connection request to the radio network controller via the base transceiver station. Based on a type of the requested service, the radio network controller determines whether or not the LTE base station is able to set the communication line. If the radio network controller determines that the LTE base station is able to set the communication line, the radio network controller requests the requesting mobile station to retransmit the RRC connection request addressed to the LTE base station.

When receiving the retransmission request, the mobile station retransmits the RRC connection request to the LTE base station. The LTE base transceiver station that receives the RRC connection request sets the communication line via a core network apparatus between a server that provides a service and the requesting mobile station, and transmits a message (RRC Connection Setup) indicating the connection is completed to the requesting mobile station.

According to the communication system of the first embodiment, the LTE system provides the service that is able to be provided by the LTE system, so that the service is able to be provided at the high communication rate.

When the LTE base station receives, from the mobile station, a second service connection request that requests a connection related to a second service, the LTE base station requests the requesting mobile station, as the source of the second service connection request, to retransmit the second service connection request addressed to a radio network controller that is able to set the communication line of the second service.

As illustrated in FIG.2B, for example, the mobile station transmits an RRC connection request to the LTE base station. Based on the type of requested service, the LTE base station that receives the RRC connection request determines whether or not the LTE base station is able to set the communication line. If the LTE base station determines that the LTE base station is unable to set the communication line, the LTE base station requests the mobile station to retransmit the RRC connection request addressed to the radio network controller.

When receiving the retransmission request of the RRC connection request, the mobile station retransmits the RRC connection request to the radio network controller via the base transceiver station. When receiving the retransmitted RRC connection request, the radio network controller sets the communication line via the mobile multimedia switching system between the server that provides the service and the mobile station, and transmits a message (RRC Connection Setup) indicating that the connection is completed to the mobile station.

According to the communication system of the first embodiment, the 3G system provides the service that is unable to be provided by the LTE system, so that all services are able to be provided.

### [Configuration of Communication System] (Mobile Station)

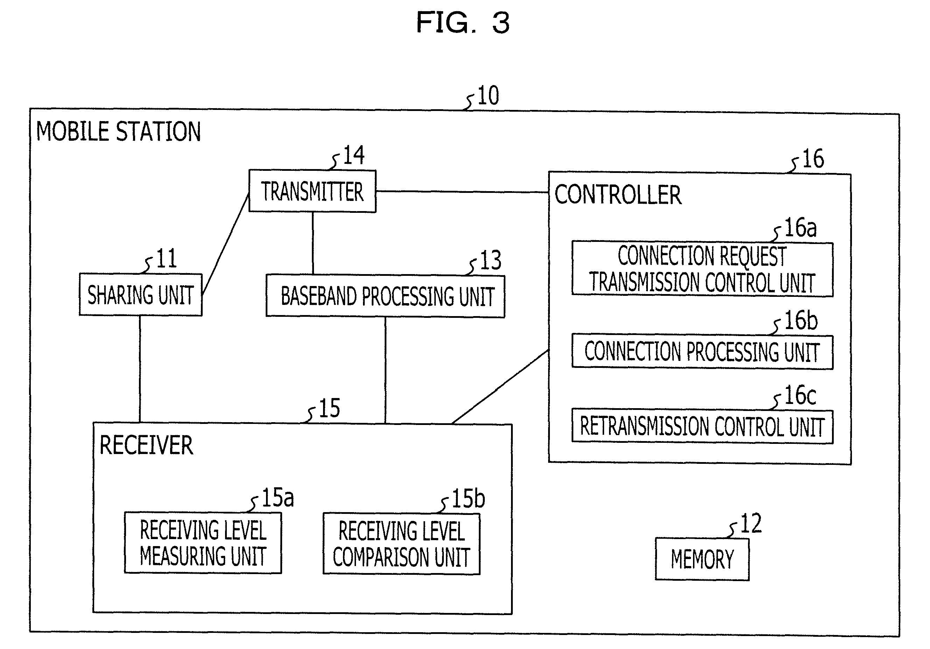

FIG.3 is a block diagram illustrating a configuration of the mobile station. As illustrated in FIG.3, a mobile station 10 includes a sharing unit 11, a memory 12, a baseband processing unit 13, a transmitter 14, a receiver 15, and a controller 16.

The sharing unit 11 includes an antenna to transmit and receive radio signals to and from each base transceiver station. The memory 12 stores data and programs required for various processing performed by the transmitter 14, the receiver 15, and/or the controller 16. As necessarily, the baseband processing unit 13 modulates a signal transmitted from the transmitter 14 or a signal received by the receiver 15. The transmitter 14 performs transmitting processing of the radio signal.

The receiver 15 includes a receiving level measuring unit 15a and a receiving level comparison unit 15b, which performs receiving processing of the radio signal.

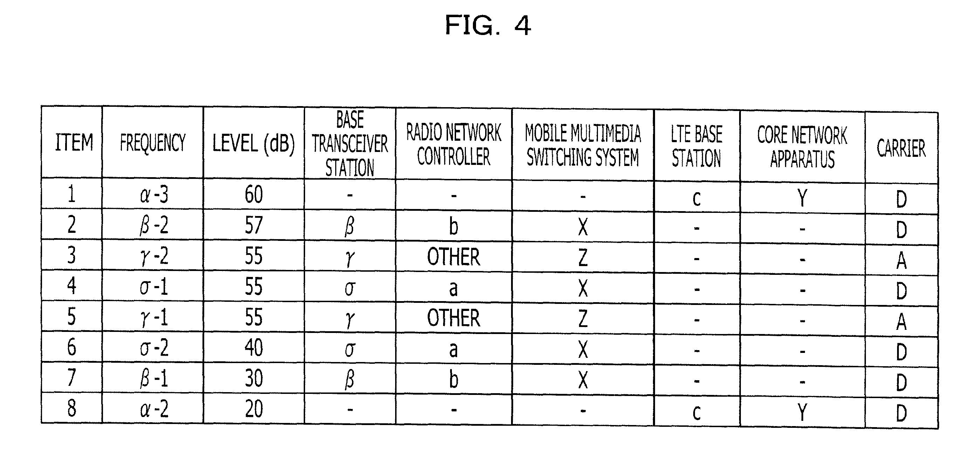

FIG. 4 is a diagram illustrating an example of a receiving level list. The receiving level measuring unit 15a measures the receiving level of the radio signal transmitted from the base transceiver station. When receiving an event from the user, for example, when receiving a start command of the service, the receiving level measuring unit 15a measures the receiving level of the radio signal transmitted from the base transceiver station. As illustrated in FIG. 4, the receiving level measuring unit 15a generates the receiving level list in which frequencies of the received radio signals are listed, and stores the receiving level values in association with the frequencies of the radio signals.

The receiving level comparison unit 15b compares the receiving levels of the radio signals and selects a single base transceiver station to which the RRC connection request is to be addressed. For example, the receiving level comparison unit 15b refers to the receiving level list generated by the receiving level measuring unit 15a and selects the base transceiver station that transmits the radio signal of the highest receiving level as the base transceiver station to which the RRC connection request is transmitted first.

The controller 16 includes a control program and an internal memory that stores a control program, programs specifying various processing procedures, and required data, and performs various processing by the programs and the data thereof. For example, the controller 16 includes a connection request transmission control unit 16a, a connection processing unit 16b, and a retransmission control unit 16c.

The connection request transmission control unit 16a transmits the RRC connection request, which includes service identification information that identifies the service to be provided, to the base transceiver station that transmits the radio signal of the highest receiving level. For example, the connection request transmission control unit 16a transmits the RRC connection request, which includes the service identification information of the service required by the user, to the base transceiver station selected by the receiving level comparison unit 15b.

The connection processing unit 16b determines whether the information received from the base transceiver station is the RRC Connection Setup or the retransmission request of the RRC connection request as a response in response to the RRC connection request. If the information is determined to be the Connection Setup, the connection processing unit 16b performs connection processing on the set communication line.

If the information transmitted back is determined by the connection processing unit 16b to be the retransmission request of the RRC connection request, the retransmission control unit 16c determines whether or not the retransmission request includes controller identification information. If the retransmission control unit 16c determines that the retransmission request does not include the controller identification information, the retransmission control unit 16c performs the existing transmitting processing of the RRC connection request. The retransmission control unit 16c transmits an RRC connection request that does not include the service identification information to the base transceiver station transmitting the radio signal of the highest receiving level.

If the retransmission control unit 16c determines that the retransmission request of the RRC connection request includes the controller identification information, the retransmission control unit 16c retransmits the RRC connection request to the controller corresponding to the controller identification information. For example, if the retransmission control unit 16c receives, via the base transceiver station, the retransmission request of the RRC connection request that includes the controller identification information of an LTE base station 30 from a radio network controller 20, the retransmission control unit 16c retransmits the RRC connection request to the LTE base station 30.

When receiving the retransmission request of the RRC connection request that includes the controller identification information of the radio network controller 20 from the LTE base station 30, the retransmission control unit 16c selects one base transceiver station from among the base transceiver stations in a lower order of the radio network controller 20 corresponding to the controller identification information included in the retransmission request. The retransmission control unit 16c retransmits the RRC connection request to the radio network controller 20 via the selected base transceiver station.

### (3G System)

A Base Transceiver Station (BTS) transmits and receives radio signals to and from a mobile station 10. AMobile Multimedia switching System (MMS) transmits data distributed from the server to the radio network controller 20 and transmits and receives the data to and from another MMS.

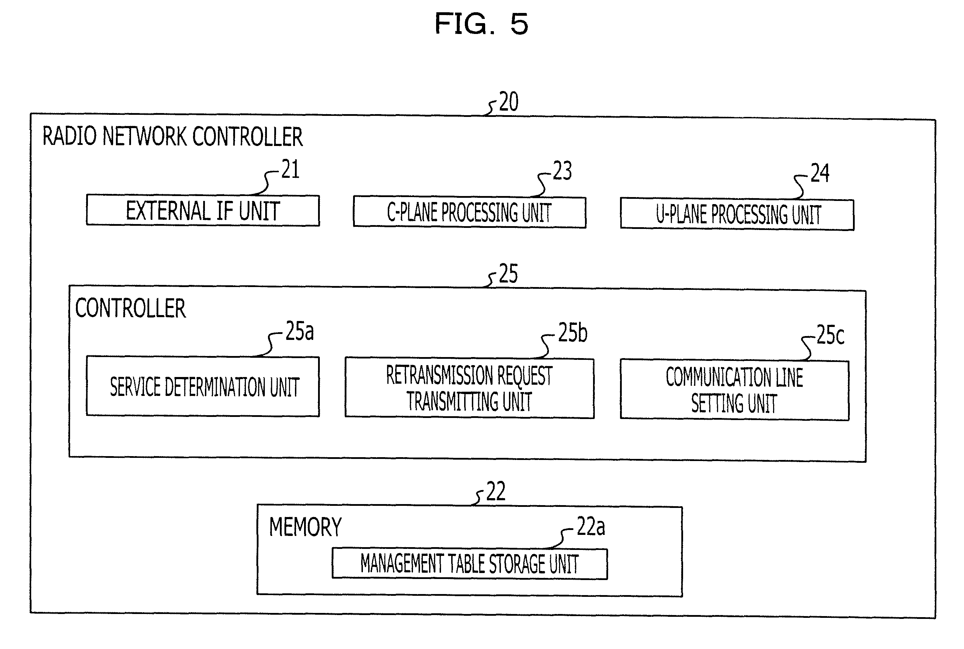

Fig. 5 is a block diagram illustrating a configuration of the radio network controller. The radio network controller (RNC) 20 sets the communication line via the MMS between the server that provides a service and the mobile station 10 as the request source of the RRC connection request. As illustrated in FIG. 5, for example, the RNC 20 includes an external IF unit 21, a memory 22, a C-Plane processing unit 23, a U-Plane processing unit 24, and a controller 25.

The external IFunit 21, which includes an input/output port, transmits and receives information to and from the BTS or the MMS. The memory 22 stores data and programs required for various processing by the C-Plane processing unit 23, the U-Plane processing unit 24, and the controller 25. The memory 22 includes a management table storage unit 22a.

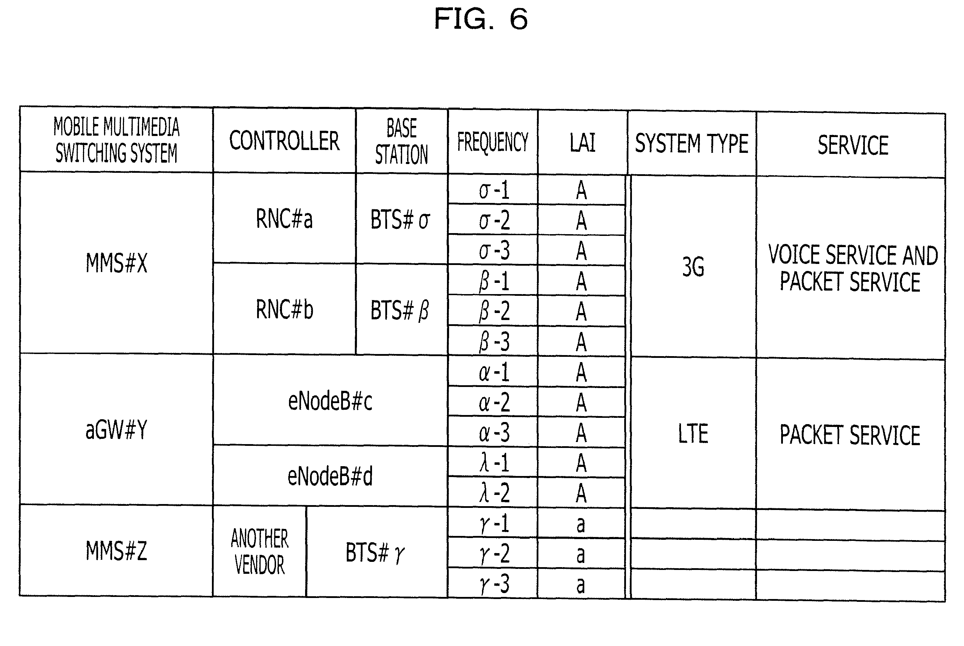

FIG.6 is a diagram illustrating an example of information to be stored in the management table storage unit 22a. The management table storage unit 22a stores service identification information, which identifies the service in which a communication line is able to be set according to the controller of each system, in association with the controller identification information that identifies the controller.

As illustrated in FIG.6, for example, the management table storage unit 22a stores a frequency code (e.g., σ-1) of the radio signal transmitted from the BTS, MMS identification information (e.g., MMS#x or aGW#Y) that identifies the MMS and the core network apparatus, controller identification information (e.g., RNC#a or eNodeB#c) that identifies the RNC 20 and the LTE base station 30, the base transceiver station identification information that identifies the BTS (e.g., BTS#σ), and a Location Area Identity (LAI) that indicates a location of a sector formed by the radio signal. The management table storage unit 22a stores the system identification information that identifies a type of the system in association with the service identification information.

The C-Plane processing unit 23 detects the information related to the communication control from the information (e. g. , the information included in C-Plane of frequency information, a mobile station condition, or the like) received from the mobile station 10 via the external IF unit 21 and inputs the information into the controller 25. The U-Plane processing unit 24 converts the user data, which is received from the mobile station 10 via the external IF unit 21, as necessary, and relays the data to the MMS. The U-Plane processing unit 24 relays the user data to the BTS from the MMS.

The controller 25 includes an internal memory that stores a control program, programs specifying various processing procedures, and required data, and executes the various processing such as protocol processing, call processing, and maintenance processing by the programs and the data. The controller 25 includes a service determination unit 25a, a retransmission request transmitting unit 25b, and a communication line setting unit 25c.

The service determination unit 25a detects service identification information that is included in the RRC connection request received from the mobile station 10 and determines whether or not the LTE base station 30 is able to set the connection line of the service that is required to be connected. For example, if the service identification information of a packet service is detected, the service determination unit 25a refers to the management table storage unit 22a to determine that the LTE base station 30 is able to set the communication line related to the packet service. If the service identification information of a voice service is detected, the service determination unit 25a refers to the management table storage unit 22a to determine that the LTE base station 30 is unable to set the communication line related to the voice service.

If the service determination unit 25a determines that the LTE base station 30 is able to set the communication line, the retransmission request transmitting unit 25b transmits a retransmission request of the RRC connection request that includes the control device identification information of the LTE base station 30, to the mobile station 10 as the request source of the RRC connection request.

For example, if the service determination unit 25a determines that the LTE base station 30 is able to set the communication line, the retransmission request transmitting unit 25b obtains the controller identification information corresponding to the LTE system from a management table. The retransmission request transmitting unit 25b transmits the retransmission request of the RRC connection request that includes the obtained controller identification information to the mobile station 10 as the request source of the RRC connection request.

If the service determination unit 25a determines that the LTE base station 30 is unable to set the communication line, the communication line setting unit 25c sets the communication line between the server that provides the service and the requesting mobile station 10 via the MMS. The communication line setting unit 25c transmits the RRC Connection Setup to the requesting mobile station 10.

### (LTE System)

The core network apparatus (aGW: Access Gateway) transmits packet data, distributed from the server, to the LTE base station 30.

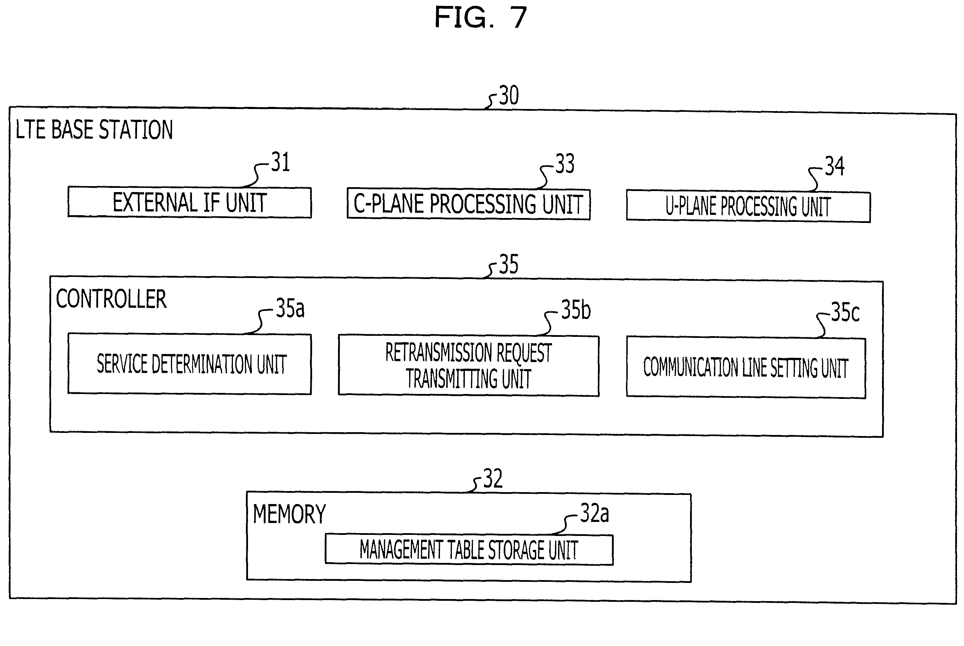

FIG. 7 is a block diagram illustrating a configuration of the LTE base station 30. The LTE base station 30 sets the connection line between a server that provides the packet service and a requesting mobile station 10 as the source of the RRC connection request via the core network apparatus. As illustrated in FIG. 7, for example, the LTE base station 30 includes an external IF unit 31, a memory 32, a C-Plane processing unit 33, a U-Plane processing unit 34, and a controller 35. The configuration of the LTE base station 30 differs from the configuration of the RNC 20 in the following respect.

The external IF unit 31, which includes an input/output port, an antenna, and the like, transmits and receives the information to and from the mobile station 10 or the core network apparatus.

The service determination unit 35a detects the service information included in the RRC connection request received from the mobile station 10 and determines whether or not the communication line setting unit 35c is able to set the communication line for the service required to be connected. For example, if the service identification information for packet service is detected, the service determination unit 35a refers to the management table storage unit 22a and determines that the communication line setting unit 35c is able to set the communication line related to the packet service. If the service identification information for voice service is detected, the service determination unit 35a refers to the management table storage unit 22a and determines that the communication line setting unit 35c is unable to set the communication line related to the voice service.

If the retransmission request transmitting unit 35b determines that the communication line setting unit 35c is unable to set the communication line, the retransmission request transmitting unit 35b transmits the retransmission request of the RRC connection request that includes the controller identification information of the RNC 20 to the requesting mobile station 10.

For example, if the retransmission request transmitting unit 35b determines that the communication line setting unit 35c is unable to set the communication line, the retransmission request transmitting unit 35b obtains the controller identification information corresponding to the 3G system from the management table. The retransmission request transmitting unit 35b transmits the RRC connection request that includes the obtained controller identification information to the requesting mobile station 10.

If the service determination unit 35a determines that the communication line setting unit 35c is able to set the communication line, the communication line setting unit 35c sets the communication line via the core network apparatus between the service provider that provides the service and the requesting mobile station 10. The communication line setting unit 35c transmits the RRC Connection Setup to the requesting mobile station 10.

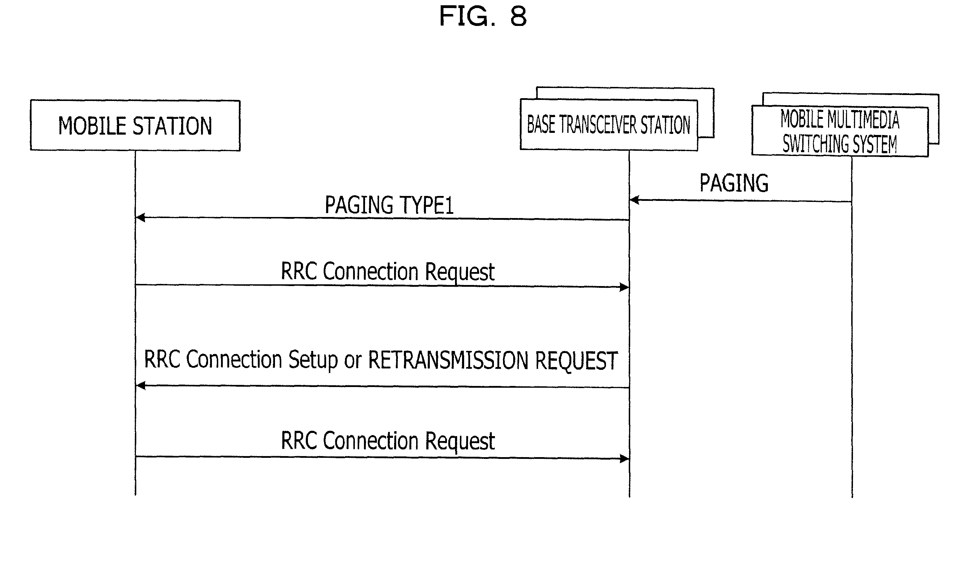

FIG.8 is a diagram illustrating incoming call connectingprocessing. With reference to FIG. 8, description will be made below of the incoming call connecting processing after the communication line is set by the communication system according to the first embodiment. As illustrated in FIG. 8, the MMS performs paging via the BTS to search for the mobile station 10 as a destination of the incoming call. On the other hand, the mobile station 10 measures each receiving level of the radio signals transmitted from the BTS and the LTE base station 30 and transmits the RRC connection request to the BTS that transmits the radio signal of the highest receiving level.

The RNC 20 determines whether or not the LTE base station 30 is able to set the communication line of the requested service. If the RNC 20 determines that the LTE base station 30 is able to set the communication line, the RNC 20 requests the mobile station as the request source to retransmit the RRC connection request addressed to the LTE base station 30. If the RNC 20 determines that the LTE base station 30 is unable to set the communication line, the RNC 20 sets the communication line and transmits the RRC Connection Setup to the mobile station 10.

The LTE base station 30 determines whether or not the LTE base station 30 is able to set the communication line of the requested service. If the LTE base station 30 determines that the LTE base station 30 is unable to set the communication line, the LTE base station 30 requests the requesting mobile station to retransmit the RRC connection request addressed to the BTS. If the LTE base station 30 determines that the LTE base station 30 is able to set the communication line, the LTE base station 30 sets the communication line and transmits the RRC Connection Setup to the mobile station 10.

### [Processing by Communication system] (Mobile Station)

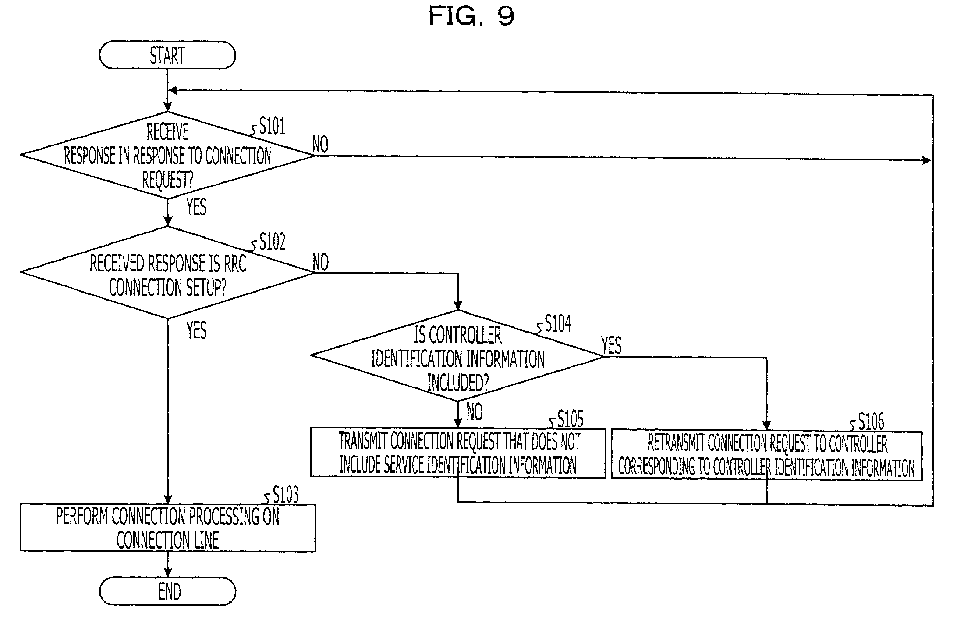

FIG. 9 is a flowchart illustrating connection response receiving processing by the mobile station. As illustrated in FIG.9, if the mobile station 10 receives a response to the RRC connection request (YES at Operation S101), the connection processing unit 16b determines whether or not the received response is the RRC Connection Setup or the retransmission request of the RRC connection request (Operation S102).

If the received response is determined to be the RRC Connection Setup (YES at Operation S102), the connection processing unit 16b performs connection processing on the set communication line (Operation S103).

If the received response is determined to be the retransmission request (NO at Operation S102), the retransmission control unit 16c determines whether or not the retransmission request of the RRC connection request includes the controller identification information (Operation S104). If the controller identification information is not included (NO at Operation S104), the connection request transmission control unit 16a retransmits an RRC connection request that does not include the service identification information to the BTS that transmits the radio signal of the highest receiving level (Operation S105). The connection processing unit 16b waits for a response in response to the RRC connection request (No at Operation S101).

If the controller identification information is included (YES at Operation S104), the connection request transmission control unit 16a retransmits an RRC connection request to the controller corresponding to the controller identification information included in the retransmission request (Operation S106). The connection processing unit 16b waits for a response in response to the RRC connection request (NO at Operation S101) .

### (Radio Network Controller)

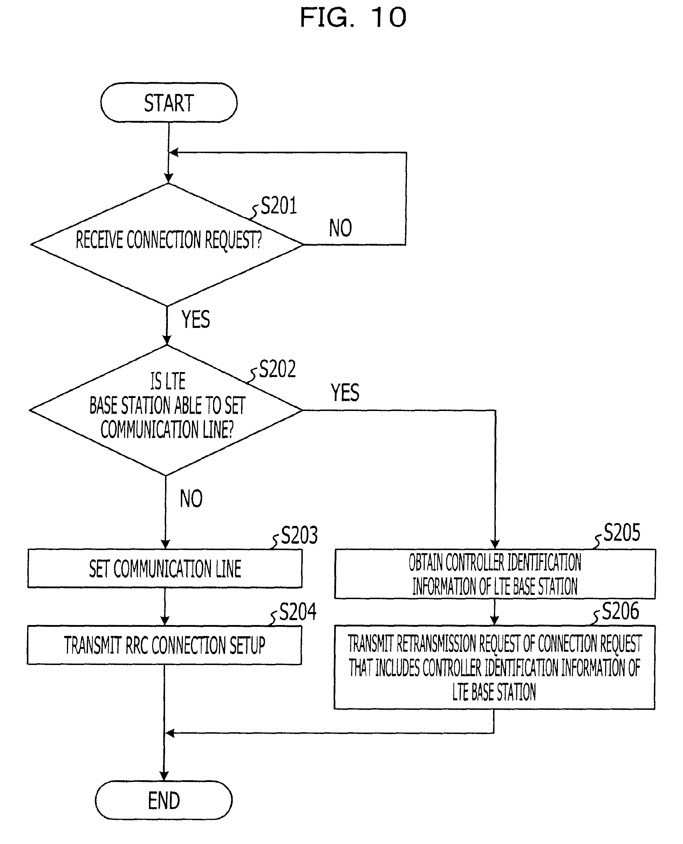

FIG. 10 is a flowchart illustrating a flow of communication line setting processing by the RNC. As illustrated in FIG.10, if the service determination unit 25a receives an RRC connection request from the mobile station 10 (YES at Operation S201), the service determination unit 25a determines whether or not the LTE base station 30 is able to set the communication line of the required service (Operation S202).

If the service determination unit 25a determines that the LTE base station 30 is unable to set the communication line for the required service (NO at Operation S202), the communication line setting unit 25c sets the communication line (Operation S203) and transmits the RRC Connection Setup to the requesting mobile station 10 (Operation S204).

If the service determination unit 25a determines that the LTE base station 30 is able to set the communication line of the required service (YES at Operation S202), the retransmission request transmission unit 25b obtains the controller identification information of the LTE base station 30fromthemanagementtable (OperationS205) . The retransmission request transmitting unit 25b transmits the retransmission request of the RRC connection request that includes the controller identification information of the LTE base station 30 to the requesting mobile station 10 (Operation S206).

### (LTE Base Station 30)

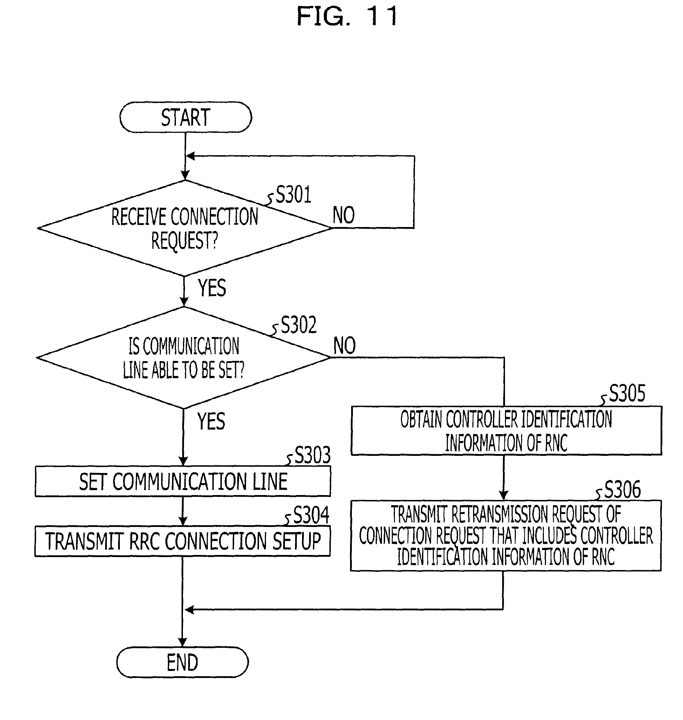

FIG.11 is a flowchart illustrating a flow of the communication line setting processing by the LTE base station 30. As illustrated in FIG. 11, if the service determination unit 35a receives an RRC connection request from the mobile station 10 (YES at Operation S301), the service determination unit 35a determines whether or not the service determination unit 35a is able to set the communication line (Operation S302).

If the service determination unit 35a determines that a communication line is able to be set (YES at Operation S302), the communication line setting unit 35c sets the communication line (Operation S303) and transmits the RRC Connection Setup to the requesting mobile station 10 (Operation S304).

If the service determination unit 35a determines a communication line is unable to be set (NO at Operation S302), the retransmission request transmitting unit 35b obtains the controller identification information of the RNC 20 from the management table (Operation S305). The retransmission request transmitting unit 35b transmits the retransmission request of the RRC connection request that includes the controller identification information of the RNC 20 to the requesting mobile station 10 (Operation S306).

As described above, according to certain embodiments the communication system, it is possible to provide services at different communication rates.

### [Second Embodiment]

### [Configuration of Communication System]

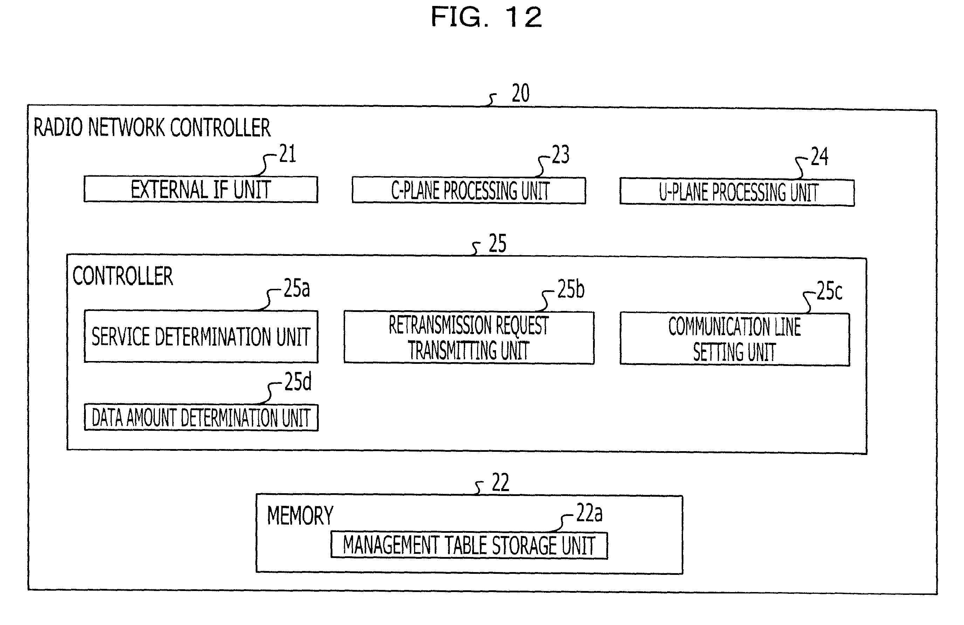

FIG. 12 is a diagram illustrating a configuration of a radio network controller according to a second embodiment. The RNC 20 of the second embodiment differs from the RNC 20 of the first embodiment in the following respect.

If the service determination unit 25a determines that the LTE base station 30 is able to set the communication line, a data amount determination unit 25d determines a data amount according to a type of data to be transmitted. For example, the data amount is relatively large if the type of the data transmitted and received to and from the mobile station 10 is streaming data, the data amount is relatively small if the type of the data is packet data such as a mail.

If the data amount of the data type determined by the data amount determination unit 25d is larger than a prescribed threshold value, the retransmission request transmitting unit 25b determines that the data related to the RRC connection request is for transmitting a large amount data such as streaming data, for example. The retransmission request transmitting unit 25b transmits the retransmission request of the RRC connection request that includes the controller identification information of the LTE base station 30 to the requesting mobile station 10.

If the data amount of the data type determined by the data amount determination unit 25d is smaller than a prescribed threshold value, the communication line setting unit 25c determines that the RNC connection request is for transmitting a small amount data such as a mail, for example. The communication line setting unit 25c sets the communication line between the server that provides the packet server and the requesting mobile station 10 via the MMS.

### [Processing by Communication System]

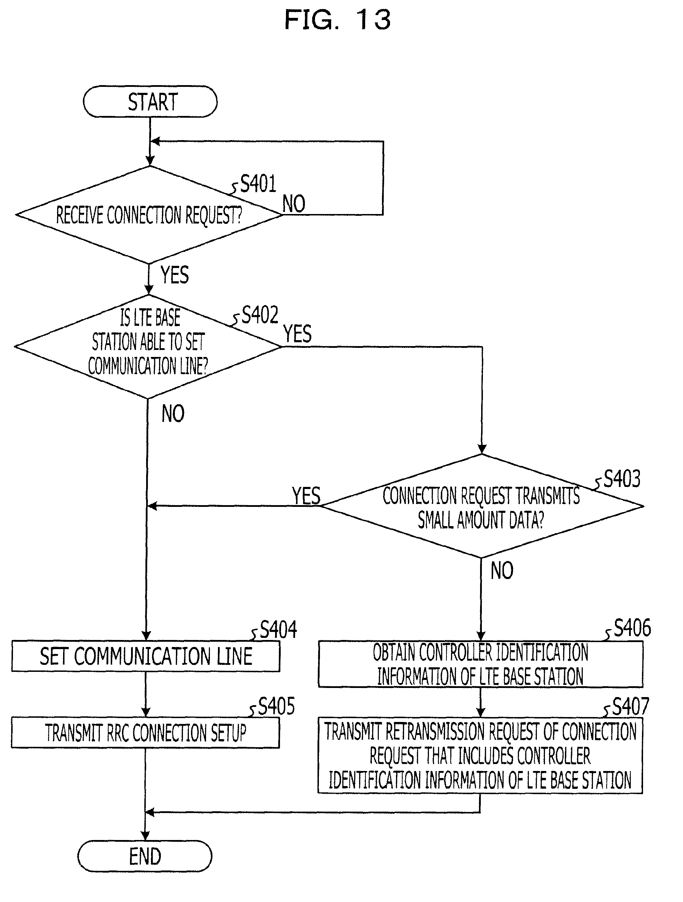

FIG.13 is a flowchart illustrating a flow of the communication line setting processing by the RNC according to the second embodiment. As illustrated in FIG. 13, if the service determination unit 25a determines that the LTE base station 30 is able to set the communication line (YES at Operation S402), the data amount determination unit 25d determines whether or not the RRC connection request transmits a small amount data (Operation S403).

If the RRC connection request is determined to transmit a small amount data (YES at Operation S403), the connection line setting unit 25c sets the communication line (Operation S404) and transmits the RRC Connection Setup to the requesting mobile station (Operation S405).

If the RRC connection request is determined to be for transmitting a large amount data (NO at Operation S403), the retransmission request transmitting unit 25b obtains the controller identification information of the LTE base station 30 from the management table (Operation S406) . The retransmission request transmitting unit 25b transmits the retransmission request of the RRC connection request that includes the controller identification information of the LTE base station 30 to the requesting mobile station 10 (Operation S407).

As described above, according to certain embodiments, for a small amount of data service that does not gain an advantage by using the LTE system, the RNC 20 sets the communication line.

In the above-described second embodiment a system manager may define in advance that an RRC connection request related to the streaming service is performed by the LTE base station 30 and that an RRC connection request related to mail is performed by the RNC 20. For example, if the LTE base station 30 receives an RRC connection request related to streaming service, the LTE base station 30 performs the processing. If the LTE base station 30 receives an RRC connection request related to mail from the mobile station 10, the LTE base station 30 may request the mobile station 10 to retransmit the RRC connection request to the RNC 20. In the same manner, if the RNC 20 receives an RRC connection request related to mail from the mobile station 10, the RNC 20 performs the processing. If the RNC 20 receives an RRC connection request related to streaming service, the RNC 20 may request the mobile station 10 to retransmit the RRC connection request to the LTE base station 30. This may characterize the services.

### [Third Embodiment]

### [Configuration of Communication System]

The configuration of a communication system of the third embodiment differs from the configuration of the communication system of the first embodiment in the following respect.

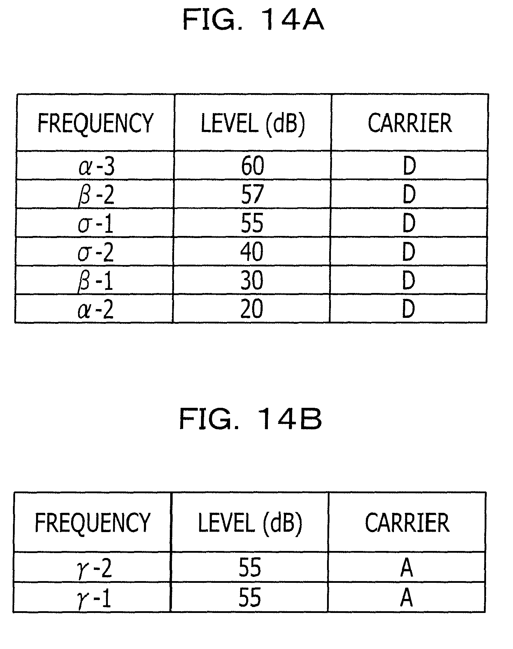

FIGs. 14A and Fig. 14B are diagrams illustrating an example of frequency information. The connection request transmission control unit 16a transmits, to the BTS transmitting radio signals of the highest receiving level, frequency information (e.g., the same information as measuredResultsOnRACH or MEASUREMENT REPORT) indicating frequency codes and receiving levels that are listed in a receiving level list, and the RRC connection request that includes the service identification information.

For example, if the frequencies belonging to the carrier to which the user is contracted are listed in the receiving level list, as illustrated in FIG.14A, the connection request transmission control unit 16a adds the RRC connection request that includes the frequency information in which the frequency codes of the frequency belonging to the carrier to which the user is contracted are associated with the receiving levels, and the service identification information to a RRC Connection Request, and transmits the RRC Connection Request. If the frequencies belonging to the carriers to which the user is contracted are not listed in the receiving level list, as illustrated in FIG.14B, the connection request transmission control unit 16a adds the connection request that includes the frequency codes of the frequency belonging to another carrier to which the user is not contracted are associated with the receiving levels, and the service information to the RRC Connection Request, and transmits the RRC Connection Request.

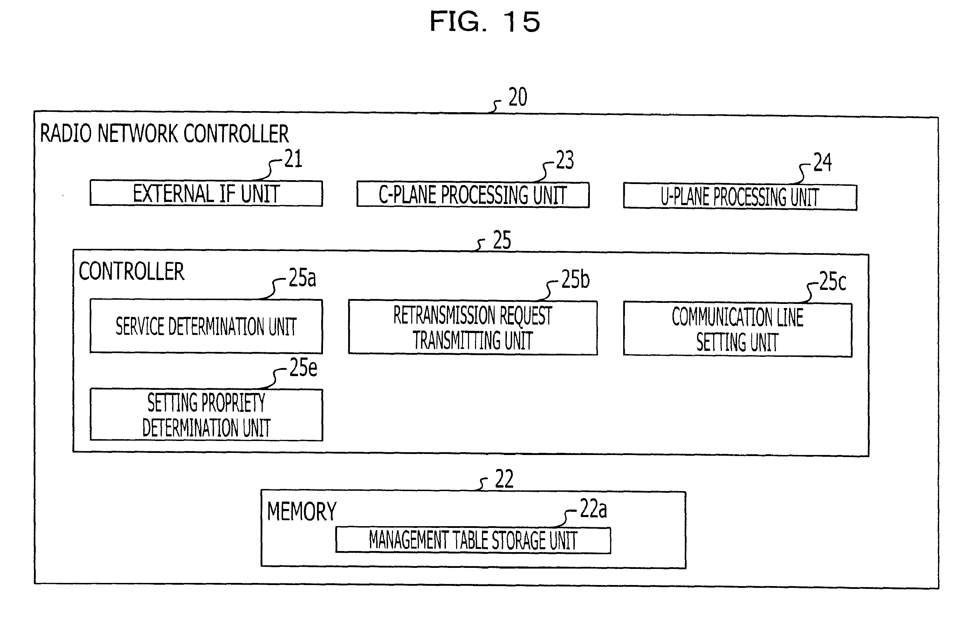

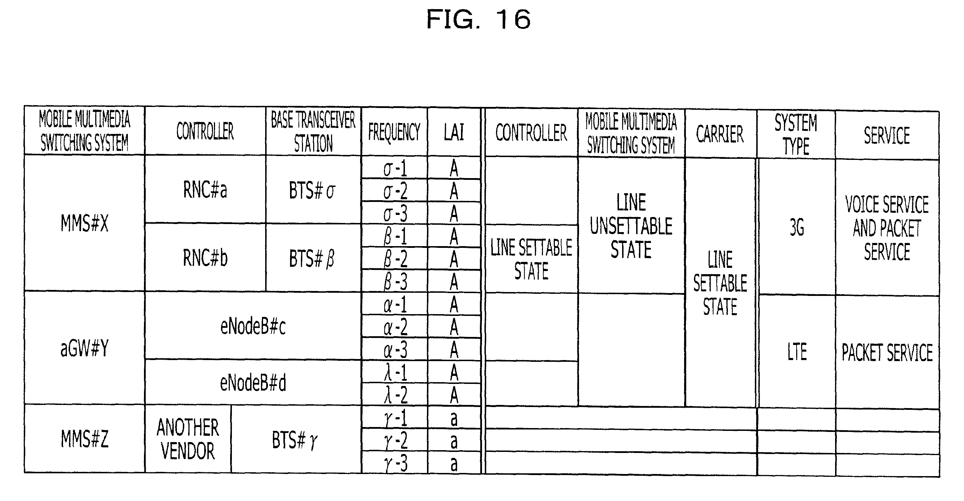

FIG. 15 is a diagram illustrating a configuration of the radio network controller of a third embodiment. FIG.16 is a diagram illustrating an example of information to be stored in the management table storage unit 22a according to the third embodiment. As illustrated in FIG.16, the management table storage unit 22a stores the setting propriety information, which indicates whether or not the RNC 20 and the LTE base station 30 are able to set the communication line, in association with the controller identification information. The management table storage unit 22a stores the setting propriety information of the carrier and the setting propriety information of the MMS in association with the controller identification information.

If the communication line is unable to be set when congestion occurs in each apparatus, the state of the setting propriety information is updated from "Line Settable State" to "Line Unsettable State." For example, FIG.16 is an example of the information to be stored in the management table storage unit 22a in RNC#b and indicates that MMS#X is unable to set the communication line.

When receiving the RRC connection request from the mobile station 10, the setting propriety determination unit 25e refers to the setting propriety information of the carrier in the management table storage unit 22a to determine whether or not the carrier is able to set the communication line. If the setting propriety determination unit 25e determines that the carrier is unable to set the communication line, the setting propriety determination unit 25e determines whether or not the RRC connection request is a transmission connection request.

Description will be made of processing in a case where the setting propriety determination unit 25e determines that the carrier is able to set the communication line. The setting propriety determination unit 25e determines whether or not the service identification information of the service to be provided in the management table storage unit 22a is stored in association with the same LAI as of the RNC 20. In other words, the setting propriety determination unit 25e determines whether or not the RNC 20 or the LTE base station 30 that is currently able to provide the service exists.

If the setting propriety determination unit 25e determines that the service identification information is stored, the service determination unit 25a determines whether or not the LTE base station 30 is able to set the communication line of the service that is required to be connected.

The retransmission request transmitting unit 25b obtains, from the management table storage unit 22a, the controller identification information of the controller in the state in which the communication line is settable. The retransmission request transmitting unit 25b requests the requesting mobile station 10 as the source of the RRC connection request to retransmit the RRC connection request addressed to the controller identified by the obtained controller identification information.

For example, if the service determination unit 25a determines that the LTE base station 30 is unable to set the communication line, the retransmission request transmitting unit 25b refers to the management table storage unit 22a to determine whether or not the MMS in a higher order of the RNC is in the state in which the communication line is settable. If the retransmission request transmitting unit 25b determines that the MMS in the higher order of the RNC is in the state in which the communication line is settable, the retransmission request transmitting unit 25b transmits, to the requestingmobile station 10, the retransmission request of the RRC connection request that includes the controller identification information of the radio network in the lower order of another MMS.

If the retransmission request transmitting unit 25b determines that the MMS in the higher order of the RNC is in the state in which the communication line is settable, the retransmission request transmitting unit 25b refers to the management table storage unit 22a to determine whether or not the RNC is in the state in which the communication line is settable. If the retransmission request transmitting unit 25b determines that the MMS is in the state in which the communication line is unsettable, the retransmission request transmitting unit 25b transmits, to the requesting mobile station 10, the retransmission request of the RRC connection request that includes the controller identification information of the radio network connected to the same MMS as of the RNC.

If the setting propriety determination unit 25e determines that the RRC connection request is not the transmission connection request, the retransmission request transmitting unit 25b transmits a message indicating that the communication line is unsettable to the requesting mobile station 10. If the setting propriety determination unit 25e determines that the RRC connection request is the transmission connection request, the transmission request transmitting unit 25b transmits, to the requesting mobile station 10, the retransmission request of the RRC connection request addressed to the controller belonging to another carrier. If the setting propriety determination unit 25e determines that the service identification information corresponding to the received RRC connection request is not stored, the retransmission request transmitting unit 25b transmits, to the requestingmobile station 10, a message indicating that the communication line is unsettable.

If the retransmission request transmitting unit 25b determines that the RNC is in the state in which the communication line is settable, the communication line setting unit 25c sets the communication line via the MMS between the server that provides the service and the requesting mobile station 10.

### [Processing by Radio Network Controller]

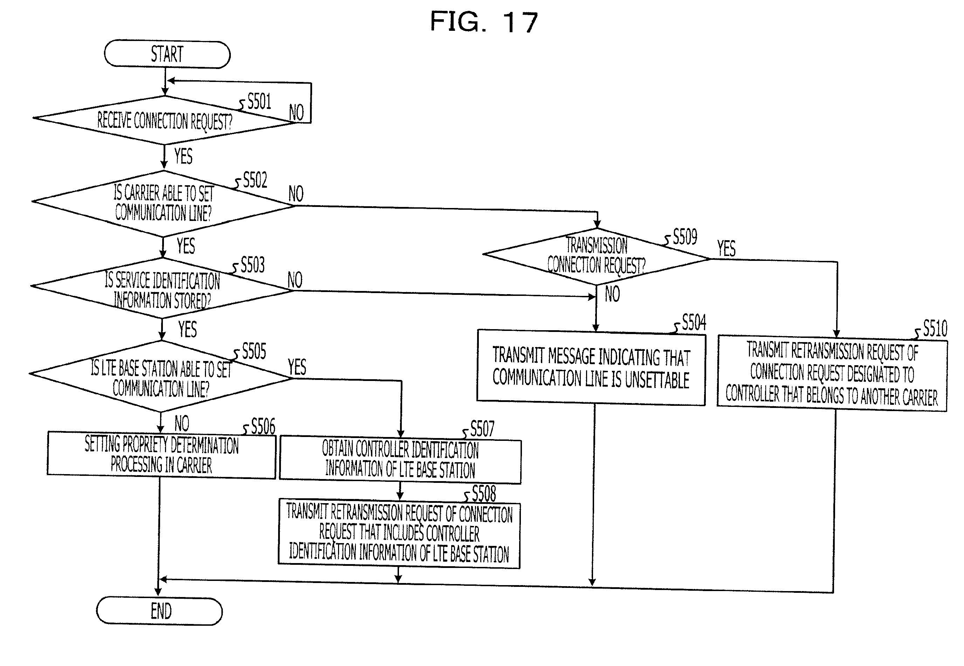

FIG.17 is a flowchart illustrating a flow of the communication line setting processing by the radio network controller according to the third embodiment. As illustrated in FIG.17, if the setting propriety determination unit 25e receives the RRC connection request from the mobile station 10 (YES at Operation S501), the setting propriety determination unit 25e determines whether or not the carrier is able to set the communication line (Operation S502).

If the setting propriety determination unit 25e determines that the carrier is able to set the communication line (YES at Operation S502), the setting propriety determination unit 25e determines whether or not the service identification information corresponding to the received RRC connection request is stored in association with the same LAI as of the RNC (Operation S503).

If the setting propriety determination unit 25e determines that the service identification information is not stored (NO at Operation S503), the retransmission request transmitting unit 25b transmits a message indicating that the communication line is unsettable to the requesting mobile station 10 (Operation S504).

If the setting propriety determination unit 25e determines that the service identification information is stored (YES at Operation S503), the service determination unit 25a determines whether or not the LTE base station 30 is able to set the communication line (Operation S505).

If the service determination unit 25a determines that the LTE base station 30 is unable to set the communication line (NO at Operation S505), the retransmission request transmitting unit 25b performs setting propriety determination processing in the carrier (Operation S506).

If the service determination unit 25a determines that the LTE base station 30 is able to set the communication line (YES at Operation S505), the retransmission request transmitting unit 25b obtains controller identification information of the LTE base station 30 from the management table (Operation S507). The retransmission request transmitting unit 25b transmits the retransmission request of the RRC connection request, which includes the controller identification information of the LTE base station 30, to the requesting mobile station 10 (Operation S508).

Description will be made of Operation S502. If the setting propriety determination unit 25e determines that the carrier is unable to set the communication line (NO at Operation S502), the setting propriety determination unit 25e determines whether or not the RRC connection request is the transmission connection request (Operation S509).

If the setting propriety determination unit 25e determines that the RRC connection request is the transmission connection request (YES at Operation S509), the retransmission request transmitting unit 25btransmits, to the requesting mobile station 10, the retransmission request of the RRC connection request addressed to the controller belonging to another carrier (Operation S510) .

If the setting propriety determination unit 25e determines that the RRC connection request is not the transmission connection request (NO at Operation S509), the retransmission requesttransmitting unit25btransmitsa message indicating that the communication line is unsettable to the requesting mobile station 10 (Operation S504).

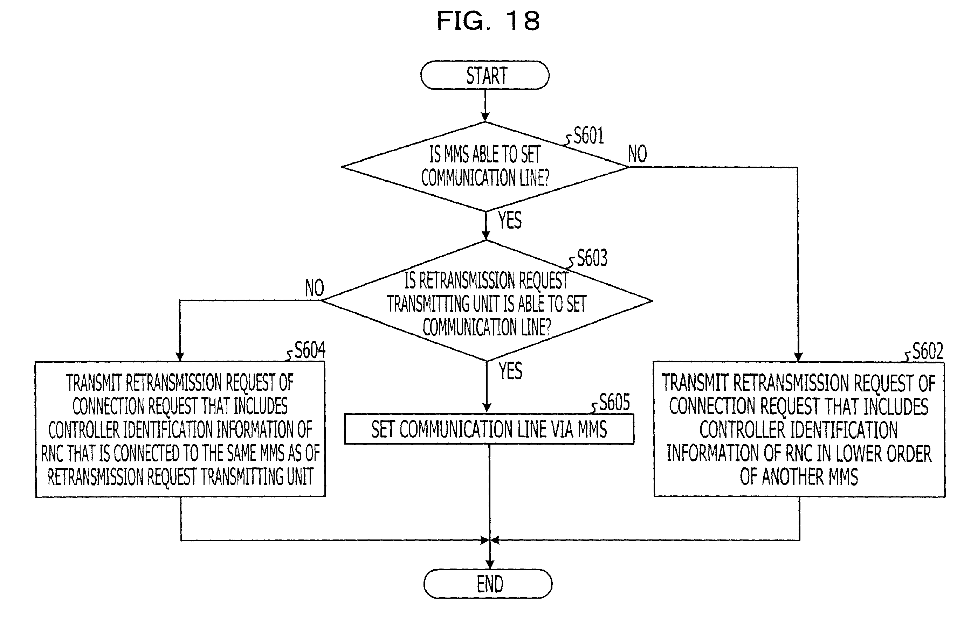

FIG. 18 is a flowchart illustrating a flow of the setting propriety determination processing. As illustrated in FIG.18, if the RRC connection request is determined to be the connection request for voice service (the setting propriety determination processing start), the retransmission request transmitting unit 25b determines whether or not the MMS in the higher order of the RNC is able to set the communication line (Operation S601).

If the retransmission request transmitting unit 25b determines that the MMS in the higher order of the RNC is unable to set the communication line (NO at Operation S601), the retransmission request transmitting unit 25b transmits, to the requesting mobile station 10, the retransmission request of the RRC connection request that includes the controller identification information of the RNC 20 in the lower order of another MMS (Operation S602).

If the retransmission request transmitting unit 25b determines that the MMS in the higher order of the RNC is able to set the communication line (YES at Operation S601), the retransmission request transmitting unit 25b determines whether or not the RNC is able to set the communication line (Operation S603).

If the retransmission request transmitting unit 25b determines that the RNC is unable to set the communication line (NO at Operation S603), the retransmission request transmitting unit 25b transmits, to the requesting mobile station 10t, the retransmission request of the RRC connection request that includes the controller identification information of the RNC 20 connected to the same MMS as of the RNC (Operation S604).

If the retransmission request transmitting unit 25b determines that the RNC is able to set the communication line (YES at Operation S603), the communication line setting unit 25c sets the communication line via the MMS between the server that provides the voice server and the requesting mobile station 10 (Operation S605).

As described above, according to the third embodiment, the mobile station 10 is requested to retransmit the RRC connection request to the controller that is able to set the communication line. T If the whole carrier is in a state in which the communication line is unsettable, the mobile station 10 is requested to retransmit the RRC connection request to the controller of another carrier.

Since it is possible to prevent the mobile station 10 from repeatedly transmitting the RRC connection request to the controller that is unable to set the communication line, the load of the radio network may be reduced.

In the third embodiment, the setting propriety determination processing by the RNC 20 is described. The LTE base station 30 may perform the above-described setting propriety determination processing. That is, a management table storage unit 32a may store the setting propriety information, which indicates whether or not the RNC 20 and the LTE base station 30 are able to set the communication line, in association with the controller identification information. If the retransmission request transmitting unit 35b is unable to set the communication line in response to the RRC connection request received from the mobile station 10, the retransmission request transmitting unit 35b may specify the controller, which is able to set the communication line, from the management table storage unit 32a, and may request the mobile station 10 to retransmit the RRC connection request addressed to the specified controller.

### [Fourth Embodiment]

Description will be made below of other embodiments of the communication system, the communication method, and the controller.

### (1) System Configuration

For example, the configuration of the mobile station 10 illustrated in FIG.3, the configuration of the radio network controller 20 illustrated in FIG.5, and the configuration of the LTE base station 30 illustrated in FIG.7 are functional concepts. The configurations are not always required to be physically configured as illustrated in the figures. The specific configuration of distribution and integration of each of the apparatuses are not limited to the configurations illustrated in the figures. For example, the retransmission request transmitting unit 25b and the communication line setting unit 25c are integrated in the RNC 20. As described above, the whole or a part of the apparatus may be distributed or integrated functionally or physically by any unit depending on the load or the use situation thereof. As for the processing function performed by each apparatus (see FIG.9 to FIG.11), the whole or a part of the processing function is realized by a CPU and the program that is analyzed and executed by the CPU, oris realized as hardware by a wired logic.

### (2) Communication Method

The following communication method is realized by the RNC 20 and the LTE base station 30 described in the above-described embodiments. That is, when receiving the first service connection request that requests a connection related to the first service from the mobile station, the RNC 20 realizes the communication method that includes a first retransmission request (see Operation S206 in FIG.10) in which a requesting mobile station is requested to retransmit the first service connection request addressed to a second controller that is able to set the communication line with the communication rate that is higher than the rate of the RNC. When receiving a second service connection request that requests a connection related to a second service from the mobile station, the LTE base station 30 realizes a communication method that includes a second retransmission request (see Operation S306 in FIG. 11) in which the requesting mobile station as the source of the second service connection request is requested to retransmit the first service connection request addressed to the first controller that is able to set the communication line for the second service.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention(s) has(have) been described in detail, it should be understood that the various changes, substitutions, and alterations could be made hereto without departing from the spirit and scope of the invention.

## Claims

1. A communication system, comprising:
a first controller which includes a first retransmission request unit to request a mobile station, as a source of a first service connection request, to retransmit the first service connection request addressed to a second controller, which is able to set a communication line with a rate that is higher than a rate of a communication line which the first controller is able to set, when receiving, from the mobile station, the first service connection request requesting a connection related to a first service, and
the second controller which includes a second retransmission request unit to request the mobile station, as the source of a second service connection request, to retransmit the second service connection request addressed to the first controller, which is able to set a communication line, when receiving, from the mobile station, the second service connection request requesting a connection related to the second service.

2. The communication system according to claim 1, wherein the first controller further comprising:
a data amount determination unit which determines a data amount according to a data type to be transmitted and received to and from the mobile station via the communication line, and
a communication line setting unit which sets the communication line between the mobile station and a service providing apparatus when the data amount is smaller than a prescribed threshold value,
wherein the first retransmission request unit requests a retransmission of the first service connection request addressed to the second controller when the data amount is not smaller than the prescribed threshold value.

3. The communication system according to claim 1, wherein the first controller further comprising:
a first setting propriety information storage unit which stores, in association with controller identification information related to each first controller, setting propriety information indicating whether or not the first controller is in a state in which a communication line is settable, and
a third retransmission request unit which obtains the control identification information corresponding to the setting propriety information from the first setting propriety information storage unit in the state in which the communication line is unsettable in response to the second service connection request, and requests a retransmission of the second service connection request addressed to the first controller that is identified by the obtained controller identification information.

4. The communication system according to claim 1, wherein the second controller further comprising:
a second setting propriety information storage unit which stores setting propriety information, which indicates whether or not the second controller is able to set the communication line, in association with the controller identification information added to the second controller, and
a fourth retransmission request unit which obtains the controller identification information corresponding to the setting propriety information from the second setting propriety information storage unit and requests the retransmission of the first service connection request addressed to the second controller which is identified by the obtained controller identification information.

5. A controller comprising:
a retransmission request unit that requests a mobile station, as a source of a service connection request, to retransmit the connection request addressed to a another controller which is able to set a communication line.

6. The controller according to claim 5, wherein the retransmission request unit requests the mobile station, as the source of the service connection request, to retransmit the connection request addressed to another controller which is able to set a communication line at a rate that is higher than a rate of a communication line which the controller is able to set.

7. A communication method which is performed by a communication system which comprises a first controller and a second controller that control a connection of a mobile station, the communication method comprising:
requesting the mobile station, as the source of the first service connection request, to retransmit the first service connection request addressed to the second controller, which is able to set a communication line at a rate that is higher than a rate of a communication line which the first controller is able to set, when receiving from the mobile station the first service connection request that requests a connection related to a first service, and
requesting the mobile station, as the source of a second service connection request, to retransmit the second service connection request addressed to the first controller, which is able to set a communication line for the second service, when receiving from the mobile station the second service connection request that requests for the connection related to the second service.

8. A communication method comprising:
detecting service information included in a connection request received from a mobile station;
determining by a controller whether a communication line related to the service information is able to be set;
setting by the controller the communication line related to the service information when the determination is positive; and
when the determination is negative transmitting a retransmission request, responsive to the connection request, to the mobile station.

9. The communication method of claim 8 further comprising:
wherein when the determination is negative
obtaining controller identification information corresponding to a controller that can set a communication line related to the service information included in the connection request received from a mobile station; and
including the controller identification information in the transmitted retransmission request to the mobile station.
